# EUROPÄISCHE PATENTSCHRIFT

(11) **EP 0 670 246 B1**
(45) Veröffentlichungstag und Bekanntmachung des Hinweises auf die Patenterteilung: **20.08.1997**
(21) Anmeldenummer: 95102486.8
(22) Anmeldetag: 22.02.1995
(51) Int. Cl.: B60R 16/02

(54) **Vorrichtung zur Signalübertragung zwischen zwei Endstellen**
Signal transmission installation between two terminals
Installation de transmission de signaux entre deux terminaux

(30) Priorität: 02.03.1994 DE 4406734
(43) Veröffentlichungstag der Anmeldung: 06.09.1995
(73) Patentinhaber: ALCATEL ALSTHOM COMPAGNIE GENERALE D'ELECTRICITE, 75008 Paris (FR)
(72) Erfinder: Czeschka, Martin, Dipl. Ing., D-91177 Thalmässing (DE)
(74) Vertreter: Döring, Roger, Dipl.-Ing.

(56) Entgegenhaltungen:
- EP-A- 0 525 839
- EP-A- 0 563 789
- DE-A- 4 129 450

## Beschreibung

Die Erfindung bezieht sich auf eine Vorrichtung zur Signalübertragung zwischen zwei Endstellen, zwischen denen eine in Windungen verlaufende und in einer im wesentlichen kreisförmigen Kassette untergebrachte Leitung angeordnet ist, an die weiterführende Leitungen an den beiden Endstellen anschließbar sind und deren Länge wesentlich größer als der Abstand der beiden Endstellen voneinander ist, bei welcher mindestens eine der beiden Endstellen relativ zu der anderen bewegbar ist, bei welcher die Kassette aus zwei Teilen besteht, einem um die Achse der Kassette drehbaren Rotor und einem feststehenden Stator, zwischen denen die Leitung angeordnet ist, und bei welcher an der Kassette eine Verriegelung zur Festlegung einer Montageposition angebracht ist, in welcher der Rotor gegenüber dem Stator unverdrehbar fixiert ist (DE-A-42 16 526).

Eine derartige Vorrichtung wird beispielsweise für die Übertragung eines Signals zum Auslösen des "Airbag" eines Prallschutzes für Kraftfahrzeuge benötigt. Sie ist zur Übertragung eines elektrischen oder optischen Signals in der Lenksäule eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der eingangs erwähnten DE-OS 42 16 526 wird für die Signalübertragung elektrischer Strom verwendet. Die Stromübertragung erfolgt durch eine beispielsweise nach Art eines Federhauses gewickelte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Für den Einbau dieser Vorrichtung in die Lenksäule eines Kraftfahrzeugs ist es daher von Bedeutung, daß die beiden Endstellen eine ganz bestimmte Position zueinander haben, mit einer entsprechenden Position der FBL, damit die vorgegebenen Umdrehungen des Rotors möglich sind, ohne daß die FBL von den Endstellen abgerissen oder sonstwie zerstört wird. Dazu ist am Rotor ein nach außen abstehender Ansatz zur Aufnahme einer in Achsrichtung der Kassette verstellbaren Schraube angebracht. Am Rotor ist außerdem ein mittels der Schraube verstellbares, federndes Element angeordnet, das in Montageposition der Kassette am Stator festgelegt und in Arbeitsposition derselben durch einen Zwischenraum vom Stator getrennt ist. Die aus Schraube und federndem Element bestehende Verriegelung ist bei dieser Vorrichtung jeweils von Hand zu betätigen.

Der Erfindung liegt die Aufgabe zugrunde, die eingangs geschilderte Vorrichtung so zu gestalten, daß Montageposition und Arbeitsposition der Kassette sich ohne gesonderten Arbeitsgang automatisch einstellen.

Diese Aufgabe wird gemäß der Erfindung dadurch gelöst,
- daß als Verriegelung eine am Stator angebrachte, zwei in entgegengesetzter Richtung wirksame federnde Teile aufweisende Feder eingesetzt ist, deren erster Teil an einer Stirnfläche des Stators anliegt und deren zweiter Teil sich auf der dieser Stirnfläche abgewandten Seite befindet,
- daß die Federkraft des am Stator anliegenden ersten Teils der Feder kleiner ist als die des zweiten Teils derselben und
- daß an der Feder ein in Richtung des Federwegs derselben verlaufender, langgestreckter Ansatz angebracht ist der in der Montageposition der Kassette unter der Wirkung des ersten Teils der Feder stehend in den Rotor eingreift und in deren Arbeitsposition bei zusammengedrückter Feder durch einen Zwischenraum vom Rotor getrennt ist.

Nach Fertigstellung der Kassette werden Stator und Rotor in der vorgegebenen Montageposition miteinander verriegelt. Dazu wird der Ansatz der Feder in die Verriegelungsstellung gebracht und unter der Wirkung des ersten Teils der Feder auch gehalten. Die Kassette kann dann in die Lenksäule eines Kraftfahrzeugs eingebaut werden. Beim Aufsetzen des Lenkrades auf die Lenksäule drückt dasselbe gegen die Feder, und zwar gegen deren zweiten Teil mit der größeren Federkraft. Dadurch wird nicht nur dieser Teil der Feder zusammengedrückt, sondern wegen dessen größerer Federkraft auch der erste Teil und damit die Feder insgesamt. Der Ansatz wird dadurch aus seiner Verriegelungsstellung bewegt. Er kommt vom Rotor frei, so daß derselbe mit dem Lenkrad unbehindert gedreht werden kann. Wenn die Kassette beispielweise für Reparaturzwecke ausgebaut werden soll, wird zunächst das Lenkrad von der Lenksäule entfernt. Dadurch wird die Feder entlastet und der Ansatz gelangt unter der Wirkung des ersten Teils derselben mit der kleineren Federkraft automatisch wieder in seine Verriegelungsstellung. Die Kassette kann dann in ihrer Montageposition, in der Stator und Rotor untereinander verriegelt sind, aus der Lenksäule genommen werden. Durch die Feder mit ihren zwei in unterschiedlichen Richtungen wirkenden Teilen können auf einfache Weise auch Toleranzen ausgeglichen werden. Das gilt insbesondere für schwankende Abstände zwischen der Unterseite eines Lenkrades und der Oberseite der montierten Kassette.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 schematisch eine prinzipielle Darstellung einer Kassette mit einer Vorrichtung nach der Erfindung.
Fig. 2 in schematischer Darstellung einen Querschnitt durch eine Kassette.
Fig. 3 eine Draufsicht auf die geschlossene Kassette.
Fig. 4 eine Seitenansicht einer bei der Vorrichtung eingesetzten Feder.
Fig. 5 und 6 Ausschnitte aus der Kassette mit unterschiedlichen Positionen der Feder.

Die Erfindung wird im folgenden für eine Kassette beschrieben, in der eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden.

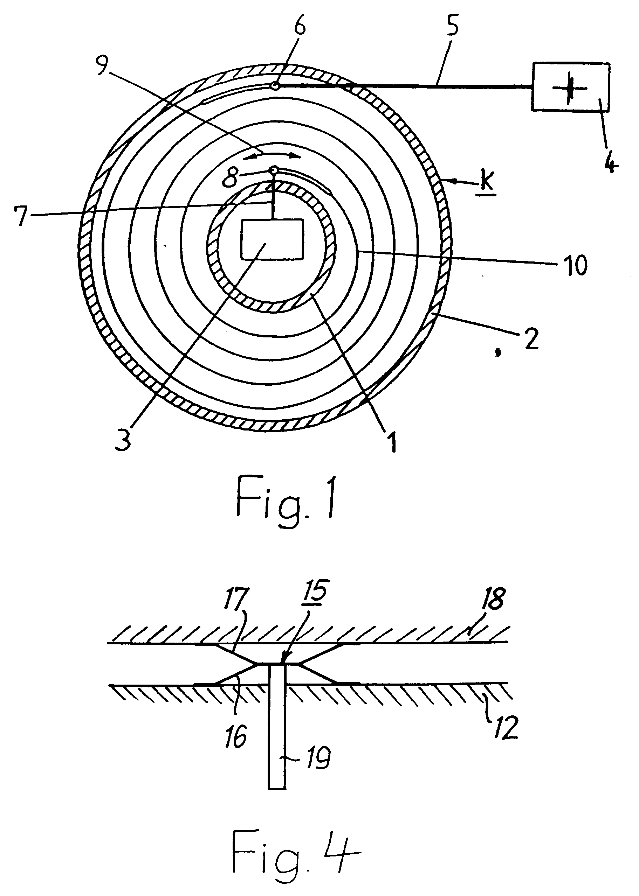

In Fig. 1 sind schematisch zwei beispielsweise kreisförmig ausgebildete Wände 1 und 2 einer Kassette K dargestellt. Sie ist für den Einbau in die Lenksäule eines Kraftfahrzeugs bestimmt. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 kann gemäß Fig. 1 in der Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert.

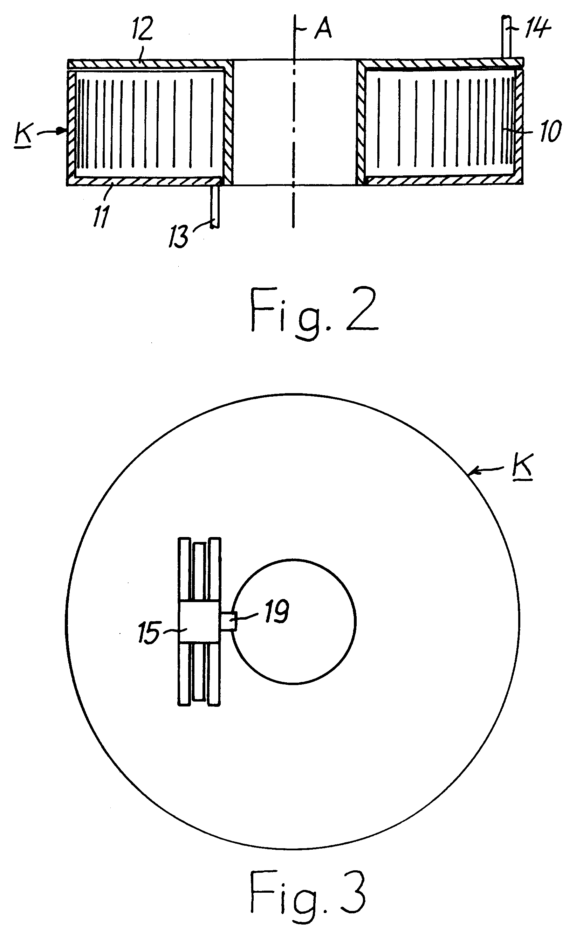

Die Kassette K besteht aus einem Rotor 11 und einem Stator 12. Der Rotor 11 ist gegenüber dem Stator 12 um die Achse A der Kassette K drehbar. Er trägt beispielsweise die Endstelle 8, an welche eine elektrische Leitung 13 anschließbar ist. Der feststehende Stator 12 umschließt die FBL 10, von der in Fig. 2 nur einige Windungen schematisch eingezeichnet sind. Er trägt in diesem Fall die Endstelle 6, an welche eine elektrische Leitung 14 angeschlossen werden kann.

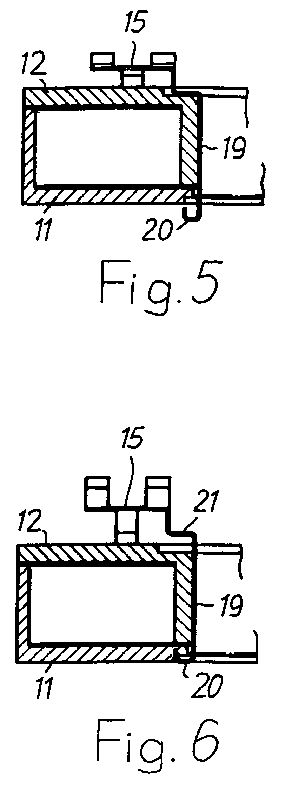

Auf der in Gebrauchslage oben liegenden Stirnfläche des Stators 12 ist eine Feder 15 angebracht, deren genauerer Aufbau aus Fig. 4 hervorgeht. Sie hat zwei Teile, die in entgegengesetzter Richtung wirken und unterschiedliche Federkraft haben. Der erste Teil 16 der Feder 15 hat gegenüber dem zweiten Teil 17 eine geringere Federkraft. Er ist zur Anlage an der Stirnfläche des Stators 12 bestimmt, während der zweite Teil 17 in Arbeitsstellung der Kassette K an einem Lenkrad 18 eines Kraftfahrzeugs anliegt. Stator 12 und Lenkrad 18 sind in Fig. 4 durch Schraffuren schematisch angedeutet. Die Feder 15 besteht aus Federstahl. Die unterschiedliche Federkraft ihrer beiden Teile 16 und 17 kann beispielsweise dadurch erhalten werden, daß der erste Teil 16 zwei Arme und der zweite Teil 17 vier Arme hat, so wie es aus den Fig. 3, 5 und 6 hervorgeht.

An der Feder 15 ist außerdem ein langgestreckter Ansatz 19 angebracht, der sich in Richtung des Federweges der Feder 15 erstreckt. Der Ansatz 19 ist am Stator 12 derart zwangsgeführt, daß er nur in Achsrichtung der Kassette K bewegt werden kann. Dazu kann beispielsweise eine in Achsrichtung der Kassette K verlaufende, den Ansatz 19 aufnehmende Nut verwendet werden. Der Ansatz 19 dient dadurch gleichzeitig als Befestigungselement für die Feder 15 am Stator 12. Er kann als flacher Streifen ausgeführt, jedoch auch quer zu seiner Längsrichtung gebogen sein.

Entsprechend der Darstellung in den Fig. 5 und 6 ist der Ansatz 19 an seinem freien Ende in bevorzugter Ausführungsform durch zweimaliges Zurückbiegen als etwa U-förmiger Haken 20 ausgebildet. Der Ansatz 19 kann an seinem freien Ende aber auch lediglich um 90° abgebogen oder in zweckmäßiger Weise auch anders ausgeführt sein. In seinem Verlauf ist eine als Anschlag wirkende Abkröpfung 21 vorgesehen, durch welche der Weg des Ansatzes 19 und damit der Federweg des ersten Teils 16 der Feder 15 begrenzt wird. Das kann auch durch jeden anderen geeigneten Anschlag erreicht werden.

Die Vorrichtung arbeitet beispielsweise wie folgt:

Nach Fertigstellung der Kassette K mit allen Einzelteilen, einschließlich der Montage der Feder 15, werden Rotor 11 und Stator 12 in die für die Montageposition der Kassette K vorgeschriebene gegenseitige Lage gebracht. Die Feder 15 wird dann etwas zusammengedrückt. Ihr Weg wird durch die Abkröpfung 21 des Ansatzes 19 begrenzt. Danach wird der Druck von der Feder 15 weggenommen. Deren erster Teil 16 wird dadurch wirksam. Der Haken 20 des Ansatzes 19 gelangt in seine aus Fig. 6 ersichtliche Verriegelungsstellung, in welcher er in den Rotor 11 eingreift. Rotor 11 und Stator 12 sind dadurch unverdrehbar miteinander verriegelt. Die Kassette K hat ihre Montageposition, in der sie in die Lenksäule eines Kraftfahrzeugs eingebaut werden kann.

Wenn das geschehen ist, wird die Lenksäule durch Aufsetzen des Lenkrades komplettiert. Dabei wird die Feder 15 durch das Lenkrad so zusammengedrückt, daß sie eine aus Fig. 5 ersichtliche Lage einnimmt. Der Haken 20 des Ansatzes 19 greift dann nicht mehr in den Rotor 11 ein. In dieser Arbeitsposition der Kassette K ist der Rotor 11 mit dem Lenkrad drehbar.

Für die geschilderte Wirkung der Feder 15 muß deren zweiter Teil 17 eine größere Federkraft als ihr erster Teil 16 haben. Es ist dadurch sichergestellt, daß durch das Lenkrad unter Zwischenschaltung des zunächst nahezu starr wirkenden zweiten Teils 17 der Feder 15 im wesentlichen der erste Teil 16 zusammengedrückt wird, so daß der Haken 20 auf jeden Fall vom Rotor 11 freikommt. Erst wenn die Abkröpfung 21 des Ansatzes 19 am Stator 12 anliegt, wird auch der zweite Teil 17 der Feder 15 zusammengedrückt. Wenn das Lenkrad abgehoben wird, gelangt der Haken 20 unter der Wirkung des ersten Teils 16 der Feder 15 wieder in seine aus Fig. 6 ersichtliche Verriegelungsstellung.

Der zweite Teil 17 der Feder 15 dient also beim Aufsetzen des Lenkrades auf die Lenksäule zunächst nur als Zwischenteil für das Zusammendrücken des ersten Teils 16 und damit zum Bewegen des Ansatzes 19. Er wird in Abhängigkeit von der Größe des Zwischenraums zwischen der unteren Fläche des Lenkrades und der oberen Fläche der Kassette K - die sich auch während des Betriebes des Kraftfahrzeugs ändern kann - erst dann mehr oder weniger zusammengedrückt, wenn der Haken 20 vom Rotor 11 entriegelt und der Weg des Ansatzes 19 durch die Abkröpfung 21 begrenzt ist. Wenn die Abkröpfung 21 am Stator 12 anliegt, kann der erste Teil 16 der Feder 15 nicht weiter zusammengedrückt werden. Die Druckkräfte wirken dann voll auf den zweiten Teil 17 der Feder 15 ein. Der Weg, um den der Ansatz 19 aus der Kassette K herausragt, ist durch die Abkröpfung 21 auf einen vorgebbaren Wert begrenzt. Dieser Wert wird auch durch den freien Raum bestimmt, der in der Lenksäule unterhalb der Kassette K zur Verfügung steht.

## Patentansprüche

1. Vorrichtung zur Signalübertragung zwischen zwei Endstellen (6,8), zwischen denen eine in Windungen verlaufende und in einer im wesentlichen kreisförmigen Kassette (K) untergebrachte Leitung (10) angeordnet ist, an die weiterführende Leitungen (5,7) an den beiden Endstellen (6,8) anschließbar sind und deren Länge wesentlich größer als der Abstand der beiden Endstellen (6,8) voneinander ist, bei welcher mindestens eine der beiden Endstellen (6,8) relativ zu der anderen bewegbar ist, bei welcher die Kassette (K) aus zwei Teilen (11,12) besteht, einem um die Achse (A) der Kassette (K) drehbaren Rotor (11) und einem feststehenden Stator (12), zwischen denen die Leitung (10) angeordnet ist, und bei welcher an der Kassette (K) eine Verriegelung 15 zur Festlegung einer Montageposition angebracht ist, in welcher der Rotor (11) gegenüber dem Stator (12) unverdrehbar fixiert ist, dadurch gekennzeichnet,
- daß als Verriegelung eine am Stator (12) angebrachte, zwei in entgegengesetzter Richtung wirksame federnde Teile (16,17) aufweisende Feder (15) eingesetzt ist, deren erster Teil (16) an einer Stirnfläche des Stators (12) anliegt und deren zweiter Teil (17) sich auf der dieser stirnfläche abgewandten Seite befindet,
- daß die Federkraft des am Stator (12) anliegenden ersten Teils (16) der Feder (15) kleiner ist als die des zweiten Teils (17) derselben und
- daß an der Feder (15) ein in Richtung des Federwegs derselben verlaufender, langgestreckter Ansatz (19) angebracht ist, der in der Montageposition der Kassette (K) unter der Wirkung des ersten Teils (16) der Feder (15) stehend in den Rotor (11) eingreift und in deren Arbeitsposition bei zusammengedrückter Feder (15) durch einen Zwischenraum vom Rotor (11) getrennt ist.

2. Vorrichtung nach Anspruch 1, dadurch gekennzeichnet, daß der langgestreckte Ansatz (19) am Stator (12) mit einer Zwangsführung festgelegt ist, die eine Bewegung nur in Achsrichtung der Kassette (K) zuläßt.

3. Vorrichtung nach Anspruch 1 oder 2, dadurch gekennzeichnet, daß der Federweg des ersten Teils (16) der Feder (15) in Richtung der Stirnfläche des Stators (12) durch einen Anschlag begrenzt ist.

4. Vorrichtung nach einem der Ansprüche 1 bis 3, dadurch gekennzeichnet, daß der langgestreckte Ansatz (19) bis zu der der Feder (15) gegenüber liegenden Stirnfläche des Stators (12) ragt und an seinem dortigen Ende zum Eingreifen in den Rotor (11) um etwa 90° abgebogen ist.

5. Vorrichtung nach einem der Ansprüche 1 bis 3, dadurch gekennzeichnet, daß der langgestreckte Ansatz (19) bis zu der der Feder (15) gegenüber liegenden Stirnfläche des Stators (12) ragt und an seinem dortigen Ende zum Eingreifen in den Rotor (11) durch zweifaches Umbiegen als etwa U-förmiger Haken (20) gestaltet ist.

6. Vorrichtung nach einem der Ansprüche 1 bis 5, dadurch gekennzeichnet, daß der langgestreckte Ansatz (19) in seinem Verlauf eine als Anschlag für die Feder (15) dienende Abkröpfung (21) hat.

7. Vorrichtung nach einem der Ansprüche 1 bis 6, dadurch gekennzeichnet, daß der langgestreckte Ansatz (19) als flacher Streifen ausgebildet ist.

8. Vorrichtung nach einem der Ansprüche 1 bis 6, dadurch gekennzeichnet, daß der langgestreckte Ansatz (19) quer zu seiner Längsrichtung gebogen ist.

## Claims

1. Device for transmitting signals between two terminals (6, 8), between which a line (10) which runs in turns and is accommodated in an essentially circular cassette (K) is arranged, to which line (10) continuing lines (5, 7) can be connected at the two terminals (6, 8) and the length of which line (10) is substantially greater than the distance between the two terminals (6, 8), in which device at least one of the two terminals (6, 8) can move relative to the other, in which device the cassette (K) comprises two parts (11, 12), a rotor (11) which can rotate about the axis (A) of the cassette (K) and a fixed stator (12), between which the line (10) is arranged, and in which device a locking means (15) for securing an installed position is attached to the cassette (K), in which position the rotor (11) is non-rotatably fixed in relation to the stator (12), characterized
- in that the locking means used is a spring (15) which is attached to the stator (12), has two sprung parts (16, 17) which are effective in opposite directions, and its first part (16) bears against an end face of the stator (12) and its second part (17) is located on the side facing away from this end face,
- in that the spring force of the first part (16) of the spring (15) which bears against the stator (12) is smaller than that of the second part (17) of the said spring (15), and
- in that an elongated projection (19) is attached to the spring (15), which projection (19) runs in the direction of the spring travel of the said spring (15), engages into the rotor (11) in the installed position of the cassette (K) under the effect of the first part (16) of the spring (15), and is separated from the rotor (11) by an intermediate space in the working position of the cassette (K) when the spring (15) is compressed.

2. Device according to Claim 1, characterized in that the elongated projection (19) is secured to the stator (12) with a restricted guiding means which permits movement only in the axial direction of the cassette (K).

3. Device according to Claim 1 or 2, characterized in that the spring travel of the first part (16) of the spring (15) is limited in the direction of the end face of the stator (12) by a stop.

4. Device according to one of Claims 1 to 3, characterized in that the elongated projection (19) projects as far as the end face of the stator (12) located opposite the spring (15) and is bent, at its end there, through approximately 90° in order to engage in the rotor (11).

5. Device according to one of Claims 1 to 3, characterized in that the elongated projection (19) projects as far as the end face of the stator (12) located opposite the spring (15) and is given, at its end there, the shape of an approximately U-shaped hook (20) by double bending in order to engage in the rotor (11).

6. Device according to one of Claims 1 to 5, characterized in that the elongated projection (19) has, along its course, a right-angled bend (21) serving as a stop for the spring (15).

7. Device according to one of Claims 1 to 6, characterized in that the elongated projection (19) is constructed as a flat strip.

8. Device according to one of Claims 1 to 6, characterized in that the elongated projection (19) is bent transversely with respect to its longitudinal direction.

## Revendications

1. Dispositif de transmission de signaux entre deux points d'extrémité (6, 8) à l'aide d'un conducteur (10) enroulé en spirale à l'intérieur d'un boîtier (K) de forme essentiellement circulaire. Des conducteurs prolongateurs (5,7) peuvent être raccordés aux extrémités (6,8) dont la longueur est sensiblement supérieure à la distance séparant les deux points d'extrémité (6,8). L'un au moins des points d'extrémité (6, 8) est mobile par rapport à l'autre. Le boîtier (K) est composé de deux pièces (11, 12) : un rotor (11) pouvant tourner autour de l'axe (A) du boîtier (K) et un stator (12) immobile entre lesquels le conducteur (10) est disposé. Le boîtier (K) comporte un élément de verrouillage (15) qui définit une position de montage pour laquelle le rotor (11) est fixe par rapport au stator (12). Dispositif caractérisé par :
- un élément de verrouillage installé sur le stator (12) et composé d'un ressort (15) comportant deux pièces (16, 17) formant ressort dans des directions opposées, la première pièce (16) étant placée à la surface du stator (12) et la deuxième pièce (17) étant placée sur le côté opposé de la surface du stator.
- une force exercée par la première pièce (16) du ressort (15) placée sur le stator (12) inférieure à celle exercée par la deuxième pièce (17) de celui-ci et
- la présence d'une excroissance (19) de forme allongée orientée dans le sens de déplacement du ressort et solidaire du ressort (15) qui dans la position de montage du boîtier (K) pénètre dans le rotor (11) sous l'action de la première pièce (16) du ressort (15) et qui se trouve séparée du rotor (11) par un espace dans la position de travail du boîtier lorsque le ressort (15) est comprimé.

2. Dispositif selon la revendication 1, caractérisé par le fait que l'excroissance de forme allongée (19) du stator (12) est guidée de façon à pouvoir se déplacer seulement selon l'axe du boîtier (K).

3. Dispositif selon la revendication 1 ou 2, caractérisé par le fait que le débattement du ressort de la première pièce (16) du ressort (15) est limité par une butée en direction de la surface du stator (12).

4. Dispositif selon les revendications 1 à 3 caractérisé par le fait que l'excroissance de forme allongée (19) se prolonge jusqu'à la surface du stator (12) située à l'opposé du ressort (15) et dont l'extrémité est recourbée à env. 90° pour pénétrer dans le rotor (11).

5. Dispositif selon les revendications 1 à 3 caractérisé par le fait que l'excroissance de forme allongée (19) se prolonge jusqu'à la surface du stator (12) située à l'opposé du ressort (15) et dont l'extrémité forme un crochet en U (20) obtenu par double pliage pour pénétrer dans le rotor (11).

6. Dispositif selon les revendications 1 à 5 caractérisé par le fait que l'excroissance de forme allongée (19) comporte un coude (21) servant de butée au ressort (15).

7. Dispositif selon les revendications 1 à 6 caractérisé par le fait que l'excroissance de forme allongée (19) a la forme d'une lame plate.

8. Dispositif selon les revendications 1 à 6 caractérisé par le fait que l'excroissance de forme allongée (19) comporte des plis perpendiculaires à sa longueur.
